# EUROPÄISCHE PATENTSCHRIFT

(11) **EP 2 945 511 B1**
(45) Veröffentlichungstag und Bekanntmachung des Hinweises auf die Patenterteilung: **30.08.2017**
(21) Anmeldenummer: 13807966.0
(22) Anmeldetag: 10.12.2013
(51) Int. Cl.: A47B 47/00, A47B 47/04, F16B 12/14, F16B 12/44

(54) **BAUKASTENSYSTEM, INSBESONDERE FÜR MÖBEL, MESSEAUFBAUTEN ODER DERGLEICHEN UND MÖBELSTÜCK ODER MESSEAUFBAU**
MODULAR SYSTEM, IN PARTICULAR FOR FURNITURE, EXHIBITION STRUCTURES OR THE LIKE, AND ITEM OF FURNITURE OR EXHIBITION CONSTRUCTION
SYSTÈME MODULAIRE, EN PARTICULIER POUR DES MEUBLES, DES STANDS DE FOIRE OU DES INSTALLATIONS SIMILAIRES ET ÉLÉMENT DE MOBILIER OU STAND DE FOIRE

(30) Priorität: 17.01.2013 DE 102013100481
(43) Veröffentlichungstag der Anmeldung: 25.11.2015
(73) Patentinhaber: Schreinerei Wolfgang Fünfgeld, 79379 Müllheim (DE)
(72) Erfinder: FÜNFGELD, Wolfgang, 79410 Badenweiler (DE)
(74) Vertreter: Westphal, Mussgnug & Partner Patentanwälte mbB
(86) Internationale Anmeldenummer: PCT/EP2013/076099
(87) Internationale Veröffentlichungsnummer: WO 2014/111203

(56) Entgegenhaltungen:
- WO-A1-2005/087048
- DE-A1- 2 617 614
- DE-A1- 10 300 590
- DE-A1-102007 043 561
- DE-U1-202008 000 485
- GB-A- 2 271 051

## Beschreibung

Möbel, Messeaufbauten und dergleichen werden in immer größerem Umfang nicht mehr in fertig zusammengebautem Zustand ausgeliefert, sondern als Satz von Einzelteilen, die bei der Auslieferung durch Angestellte des Lieferanten oder den Käufer oder bei Selbstabholung durch den Käufer zusammengebaut werden.

Als Konsequenz aus dieser Entwicklung sind Baukastensysteme entstanden, aus denen Möbel, Messeaufbauten oder dergleichen mehr, z.B. Raumstrukturen, zusammengebaut werden können. Ein solches Baukastensystem für Möbel, Messeaufbauten oder dergleichen besteht in der Regel aus einer Reihe von genormten Möbel- oder Messestandteilen, z.B. Wand-, Decken- und/oder Bodenmodulen, die in dieser Beschreibung unter dem Begriff "Wandmodule" zusammengefasst werden, und Verbindungselementen, mit denen die genormten Teile miteinander verbindbar sind.

Durch Kombination der Bauteile und/oder Variation des Aufbaus derselben kann das aus dem Baukastensystem zusammengesetzte Möbelstück bzw. der Messeaufbau auf einfache und flexible Weise an die durch den Raum, in dem es aufgestellt werden soll, aber auch an die Wünsche und Vorstellungen des Kunden angepasst werden. Neben diesem offensichtlichen Vorteil für den Kunden haben solche Baukastensysteme aber auch für den Hersteller erhebliche Vorteile, denn es kann ein breites Angebot ganz unterschiedlicher Möbelstücke und Messeaufbauten auf der Basis weniger individueller Einzelbauteile, die dann jeweils in hoher Stückzahl günstig gefertigt werden können, offeriert werden.

Derartige Baukastensysteme für Möbel, Messeaufbauten oder dergleichen sind beispielsweise aus der WO 2005/087048 A1, der DE 102007043561 A1 und der DE 10 2007043064 A1 bekannt.

Aus der DE 20 2008 000 485 U1 ist ein Baukastensystem mit den Merkmalen des Oberbegriffs des Anspruchs 1 bekannt.

Problematisch bei den aus diesen Druckschriften bekannten Baukastensystemen für Möbel, Messeaufbauten oder dergleichen ist aber, dass im Wesentlichen plattenförmige Abschnitte der Verbindungselemente zumindest abschnittsweise in Nuten aufgenommen sind, welche in den Wandmodulen vorgesehen sind, wobei die Nuten im Wandmodul von seiner frontseitigen Fläche, welche bei zusammengebautem Möbelstück dem Betrachter zugewandt ist, zur der frontseitigen Fläche gegenüberliegenden rückseitigen Fläche hin verlaufen und zwischen Flächenabschnitten der Wandflächen des Wandmoduls, also der Flächen, welche bei zusammengesetztem Möbelstück eine Begrenzung desselben in seinem Innenraum oder hin zum Außenraum definieren, liegen.

Diese Nutgeometrie neigt dazu, auszubrechen, wenn sie einer starken Belastung ausgesetzt wird, was insbesondere dann der Fall ist, wenn bei eingeführtem Verbindungselement ein Wandmodul angehoben wird, was z.B. beim Aufbau eines Möbelstücks oder Messestands oft der Fall ist, um eine Verbindung mit einem weiteren Wandmodul auf der dem bereits eingeführten Verbinder gegenüberliegenden Seite des Wandmoduls herbeizuführen.

Die der Erfindung zu Grunde liegende Aufgabe besteht daher darin, ein Baukastensystem für Möbel, Messeaufbauten oder dergleichen, insbesondere für regalartige, eine Vielzahl von Fächern aufweisende Stücke, bereitzustellen, das einfach zu fertigen und zu montieren ist und zugleich aber zusammengefügten Modulen eine hohe Stabilität verleiht.

Diese Aufgabe wird gelöst durch ein Baukastensystem für Möbel, Messeaufbauten oder dergleichen mit den Merkmalen des Patentanspruchs 1. Vorteilhafte Weiterbildungen der Erfindung sind Gegenstand der Unteransprüche.

Das erfindungsgemäße Baukastensystem für Möbel, Messeaufbauten oder dergleichen weist, wie üblich, Wandmodule und Verbindungselemente für die Wandmodule auf. Unter Wandmodulen sind dabei Bauteile zu verstehen, die, wenn der Baukasten zu einem Möbelstück zusammengebaut ist, einen Wandabschnitt einer Innen- oder Außenwand des Möbelstücks bzw. Messestands oder eines Teils desselben bilden, z.B. Wände, Boden und/oder Decke eines Regalfachs, aber auch Bodenplatte, Deckenplatte oder Seitenwände des Möbels.

Die Wandmodule weisen jeweils - ebenfalls wie üblich - einander gegenüberliegende Wandflächen, eine frontseitige Fläche und eine der frontseitigen Fläche gegenüberliegende rückseitige Fläche sowie einander gegenüberliegende Kontaktflächen auf.

Als Wandfläche werden dabei die Flächen bezeichnet, welche beim zusammengebauten Möbelstück bzw. Messestand die Oberfläche einer Wand im Inneren des Möbelstücks bzw. Messestands definieren, insbesondere Boden, Decke und Seitenflächen von Regalfächern.

Im Gegensatz dazu sind gemäß dieser Beschreibung die frontseitigen Flächen diejenigen Flächen des Wandmoduls, die in zusammengebautem Zustand des Möbels oder Messestands dem Betrachter zugewandt sind, rückseitige Flächen die den frontseitigen Flächen gegenüberliegenden Flächen und die Kontaktflächen diejenigen Flächen des Wandmoduls, die dazu ausgelegt sind, in zusammengebautem Zustand des Möbelstücks oder Messestands in Kontakt mit einer Kontaktfläche eines weiteren Wandmoduls zu stehen.

Vorsorglich wird darauf hingewiesen, dass diese Definitionen bei einem gegebenen Wandmodul eindeutig sind. Da die Wandmodule zweckmäßigerweise als Platten oder Bretter, also Körper in der Grundform eines flachen Quaders ausgebildet sind, ist vorgegeben, welche Oberflächen als Wandflächen verwendbar sind, nämlich die beiden größten Oberflächen des quaderförmigen Körpers. Darüber hinaus sind auch Kontaktflächen, an denen der Kontakt zu anderen Wandmodulen, insbesondere über Verbindungselemente, hergestellt wird von frontseitigen und rückseitigen Flächen für den Benutzer, der aus dem Baukastensystem das Möbelstück, den Messestand oder dergleichen zusammenbaut und erst recht für den Fachmann klar zu unterscheiden, da die Verbindungselemente eine Verbindung von frontseitigen und rückseitigen Flächen miteinander nicht erlauben.

Weiter weist das Baukastensystem für Möbel, Messeaufbauten oder dergleichen Verbindungselemente zum Verbinden der Wandmodule miteinander auf, wobei mindestens eine Querschnittsfläche des Verbindungselements L-förmig, T-förmig oder kreuzförmig ist. Die dadurch vorgegebene Grundform definiert, ob es sich um einen Verbinder für zwei, drei oder vier Wandmodule handelt, da ein L-förmiges Verbindungselement zwei Abschnitte, ein T-förmiges Verbindungselement drei Abschnitte und ein kreuzförmiges Verbindungselement vier Abschnitte zum Einführen in eine Ausnehmung aufweist, die jeweils von den beiden Armen des L, den drei Armen des T oder den vier Armen des Kreuzes gebildet werden.

Erfindungswesentlich ist, dass die Wandmodule mindestens eine Ausnehmung zur passgenauen Aufnahme jeweils eines an die Form der Ausnehmung angepassten Abschnitts eines Verbindungselements aufweisen, wobei die Ausnehmung die folgenden Bedingungen erfüllt:
Erstens verläuft sie ausgehend von den Kontaktflächen auf einer Seite des Wandmoduls in Richtung auf die diesen gegenüberliegenden Kontaktflächen auf der anderen Seite des Wandmoduls. Zweitens durchsetzt sie das Wandmodul von einer Wandfläche zur gegenüberliegenden Wandfläche.

Drittens liegt sie zwischen Abschnitten der frontseitigen Fläche und der dieser gegenüberliegenden rückseitigen Fläche.

Ferner entspricht die Ausdehnung der Abschnitte der Verbindungselemente, wenn sie in die Ausnehmung eines Wandmoduls eingesetzt sind, in der Richtung senkrecht zu den einander gegenüberliegenden Wandflächen des Wandmoduls dem Abstand der einander gegenüberliegenden Wandflächen des Wandmoduls. Diese Bedingung grenzt die Verbindungselemente insbesondere von solchen ab, bei denen nicht in die Ausnehmung eines Wandmoduls aufgenommene, abschnittsweise auf mindestens einer von dessen Oberflächen Einführhilfen oder Führungsschienen vorgesehen sind. Sie ist insbesondere dann erfüllt, wenn der Querschnitt der Arme des Verbindungselements an den Querschnitt der Ausnehmung angepasst ist bzw. dieselben Querschnitte vorliegen.

Diese Ausgestaltung bringt eine Reihe von wesentlichen Vorteilen mit sich. Insbesondere ist, da die Verbindungselemente in Ausnehmungen eingesetzt sind, die das Wandmodul von einer Wandfläche zur gegenüberliegenden Wandfläche durchsetzen und nur sich nur über einen geringen Bruchteil des Gesamtabstands zwischen frontseitiger Fläche und rückseitiger Fläche erstrecken, die Gefahr eines Ausbrechens des Wandmoduls bei Belastung, insbesondere auch bei einem Verkippen des Wandmoduls während das Möbelstück oder der Messeaufbau aufgebaut wird, erheblich reduziert.

Gleichzeitig wird durch die wechselseitige Anpassung zwischen der Form des Abschnitts des Verbindungselements und der Ausnehmung einerseits sichergestellt, dass in zusammengebautem Zustand des Möbelstücks oder Messeaufbaus auch im Bereich der Ausnehmung eine ebene, stufenlose Materialoberfläche vorhanden ist, was insbesondere für als Regalböden verwendete Wandmodule wichtig ist, und anderseits eine exakt ausgerichtete und im verbundenen Zustand wenig Spiel aufweisende Verbindung hergestellt.

Darüber hinaus wird durch diese Maßnahme in Verbindung mit der durch die Anpassung einer Dimension der Verbindungselemente an den Abstand der gegenüberliegenden Wandflächen eines Wandmoduls ein sehr stabiles Verbindungselement, das in großflächigem Kontakt zum Wandmodul steht, bereitgestellt. Dies ist vor allem für senkrecht zu der Oberfläche, auf der das Möbelstück, der Messeaufbau oder dergleichen aufgebaut werden soll, stehende Wandmodule wichtig, denn dadurch kann die Last weiter vom Boden entfernter Wandmodule in das Verbindungselement eingeleitet und von diesem an das in Richtung auf den Boden nächste senkrecht zum Boden angeordnete Wandmodul weitergeleitet werden, so dass eine effektive Lastabtragung, die der Statik des Möbels, Messeaufbaus oder der Raumstruktur zu Gute kommt, erfolgt.

Wegen ihrer einfachen Geometrie, die besonders geringen Aufwand sowohl bei der Herstellung der Verbindungselemente als auch bei der Einbringung der Ausnehmungen in die Wandmodule mit sich bringt, haben die Verbindungselemente bevorzugt die Gestalt L-förmig, T-förmig oder kreuzförmig miteinander verbundener balkenförmiger Abschnitte. Zu beachten ist dabei, dass das auch aus einem Stück geformte, z.B. gegossene oder im Metallspritzgussverfahren hergestellte Verbindungselemente der vorstehend genannten Formgebung miteinander verbundene Abschnitte haben.

Ein Abschnitt ist dabei insbesondere dann balkenförmig, wenn er in seiner Erstreckungsrichtung gerade verläuft und senkrecht zu seiner Erstreckungsrichtung zumindest in einem Teilabschnitt einen rechteckigen Querschnitt mit einem Verhältnis der längeren Seite des Rechtecks zur kürzeren Seite des Rechtecks < 5, bevorzugt <2 oder einen quadratischen Querschnitt aufweist. Allerdings ist dafür, dass ein Abschnitt balkenförmig ist, nicht zwingend erforderlich, dass er eine zu seinem Querschnitt parallele Stirnfläche aufweist, die den Abschnitt in einer Richtung senkrecht zum Querschnitt begrenzt. Insbesondere kann die Stirnfläche auch gewölbt oder halbkreisförmig sein oder eine andere Formgebung haben.

Ferner entspricht gemäß dieser Ausgestaltung die Ausdehnung des rechteckigen Querschnitts der balkenförmigen Abschnitte des Verbindungselements in der Richtung einer Seite des Rechtecks dem Abstand der einander gegenüberliegenden Wandflächen eines Wandmoduls und in der Richtung der anderen Seite des Rechtecks der Ausdehnung der Ausnehmung in Richtung der direkten Verbindung zwischen frontseitiger und rückseitiger Fläche und beträgt bevorzugt nur einen kleinen Bruchteil, insbesondere weniger als 1/4, des Gesamtabstands zwischen frontseitiger Fläche und rückseitiger Fläche.

Die Befestigung zwischen Wandmodul und Verbindungselement kann dabei auf verschiedene Weise erreicht werden. Grundsätzlich reicht es, wenn ein Abschnitt eines Verbindungselements eine Bohrung aufweist, die, wenn das Verbindungselement bestimmungsgemäß mit einem Abschnitt in die Ausnehmung eines Wandmoduls eingeführt ist, in Richtung der direkten Verbindung zwischen frontseitiger und rückseitiger Fläche des Wandmoduls verläuft. Durch das Wandmodul hindurch kann dann eine Schraube in diese Bohrung eingreifen oder durch sie hindurchgeführt werden. Vorteilhafterweise ist dazu eine entsprechende Bohrung im Wandmodul vorgebohrt vorgesehen, sie kann aber auch erst beim Aufbau hergestellt werden.

Eine alternative, bevorzugte Möglichkeit besteht darin, dass in der Ausnehmung des Wandmoduls ein sich in Richtung der direkten Verbindung zwischen den Kontaktflächen erstreckender Zapfen vorgesehen ist und dass das Verbindungselement mindestens einen Abschnitt mit einer Bohrung zur passgenauen Aufnahme des Zapfens aufweist. Besonders bevorzugt ist dabei, wenn im Zapfen zusätzlich eine Bohrung, insbesondere eine Gewindebohrung angeordnet ist, bevorzugt mit einem konusförmigen Einführabschnitt, die in Richtung der direkten Verbindungslinie zwischen den gegenüberliegenden Wandflächen des Wandmoduls verläuft und der Abschnitt des Verbindungselements, der den Zapfen in der Bohrung aufnimmt, eine korrespondierende, bei bestimmungsgemäßer Anordnung des Verbindungselements an einem Wandmodul in Richtung der direkten Verbindungslinie zwischen den gegenüberliegenden Wandflächen des Wandmoduls verlaufende Bohrung aufweist, so dass durch diese Bohrungen die Verbindung zwischen Wandmodul und Verbindungselement fixierbar ist, beispielsweise durch Eindrehen einer Schraube. Dies führt zu einer sehr einfachen Fixierung der Wandmodule beim Aufbau, denn sie müssen lediglich eingesteckt und in einer vorgebohrten (Gewinde-) Bohrung mit einer Schraube fixiert werden.

Als Zapfen kann insbesondere ein in das Wandmodul eingeschraubter Stift dienen, wie er z.B. von der Scheulenburgdirekt GmbH & Co. KG erhältlich ist.

In einer besonders bevorzugten Ausführungsform der Erfindung ist vorgesehen, dass mindestens ein Verbindungselement eine Gewindebohrung zur verstellbaren Aufnahme eines an einer Schraube angeordneten Möbelfußes oder Messestandfußes aufweist. Dies macht separate Aufnahmen für etwaig vorgesehene Möbelfüße bzw. Messestandfüße überflüssig und ermöglicht überdies auf überaus einfache Weise, das Möbelstück oder den Messeaufbau auch auf einem unebenen Untergrund so aufzustellen, dass dessen einzelne Regale oder Fächer eben verlaufen.

Insbesondere kann beim erfindungsgemäßen Baukastensystem ausreichen, zwei gegebene Wandmodule jeweils nur über ein einziges Verbindungselement miteinander zu verbinden. Dazu ist es dann besonders zweckmäßig, wenn die Ausnehmung gleich weit von der frontseitigen Fläche und der rückseitigen Fläche des Wandmoduls beabstandet ist.

Besonders vorteilhaft ist es, wenn die Kontaktfläche keilförmig ausgestaltet ist und aus Teilflächen besteht, welche ausgehend von den Wandflächen der Wandmodule unter einem Winkel von 45° von den Wandflächen fort nach außen aufeinander zulaufen. Diese Formgebung der Kontaktfläche führt, insbesondere deshalb, weil durch Anpassung der Ausnehmung an die entsprechende Länge des aufzunehmenden balkenförmigen Abschnitts des zugehörigen Verbindungselements ein Kontakt zwischen den Teilflächen unterschiedlicher Module besteht, wenn das Möbelstück oder der Messeaufbau zusammengesetzt ist, zu einer vorteilhaften Einleitung der Kräfte, die insbesondere auf Wandmodule, welche als Boden eines Faches verwendet werden wirken, in dazu senkrecht verlaufende, tragende Wandmodule.

Ein erfindungsgemäßes Möbelstück bzw. ein erfindungsgemäßer Messeaufbau zeichnen sich jeweils dadurch aus, dass das Möbelstück oder der Messeaufbau zumindest teilweise auf einem erfindungsgemäßen Baukastensystem für Möbel, Messeaufbauten oder dergleichen basiert.

Besonders bevorzugt ist dabei ein Möbelstück oder Messeaufbau, bei dem die Last der senkrecht zu einem Boden, auf dem das Möbelstück oder der Messeaufbau steht, angeordneten Wandmodule in die Verbindungselemente, welche das jeweilige Wandmodul mit dem in Richtung auf den Boden hin angrenzende senkrecht zum Boden angeordnete Wandmodul hin verbinden, eingeleitet und von diesem an dieses angrenzende Wandmodul abgeleitet werden.

Besonders vorteilhaft für die Stabilität des Möbelstücks oder Messeaufbaus ist es, wenn Teilflächen der Kontaktflächen unterschiedlicher Wandmodule aufeinander abgestützt sind.

Die Erfindung wird nachfolgend anhand von Zeichnungen, die konkrete Ausführungsbeispiele der Erfindung darstellen, näher erläutert. Es zeigen:
- Fig.1:: ein Baukastensystem für Möbel, Messeaufbauten oder dergleichen, dargestellt als Explosionszeichnung eines aus dem Baukastensystem zusammengesetzten Möbelstücks,
- Fig. 2a:: ein aus dem in Figur 1 dargestellten Baukastensystem zusammengesetztes Segment eines Möbels, Messeaufbaus oder dergleichen in zusammengesetztem Zustand,
- Fig. 2b:: eine Ausschnittsvergrößerung aus der Figur 2a zur Illustration des durch ein erfindungsgemäßes Baukastensystem ermöglichten Lastabtrags,
- Fig. 3a:: eine erste Ausschnittsvergrößerung der Explosionszeichnung aus Figur 1,
- Fig. 3b:: eine zweite Ausschnittsvergrößerung der Explosionszeichnung aus Figur 1,
- Fig. 3c:: die Ausschnittsvergrößerung aus Figur 3b bei Verwendung einer ersten Variante des L-förmigen Verbindungselements,
- Fig. 3d:: die Ausschnittsvergrößerung aus Figur 3b bei Verwendung einer zweiten Variante des L-förmigen Verbindungselements,
- Fig. 4a:: einen Querschnitt durch ein L-förmiges Verbindungselement, und
- Fig. 4b:: einen Querschnitt durch ein T-förmiges Verbindungselement.

In allen Figuren sind gleiche Bestandteile gleicher Ausführungsformen mit gleichen Bezugszeichen gekennzeichnet, sofern nichts anderes gesagt ist. Ferner sind in Figuren, in denen bestimmte Bestandteile mehrfach auftauchen, diese nicht alle mit dem zugehörigen Bezugszeichen versehen, um die Übersichtlichkeit der Figuren zu gewährleisten.

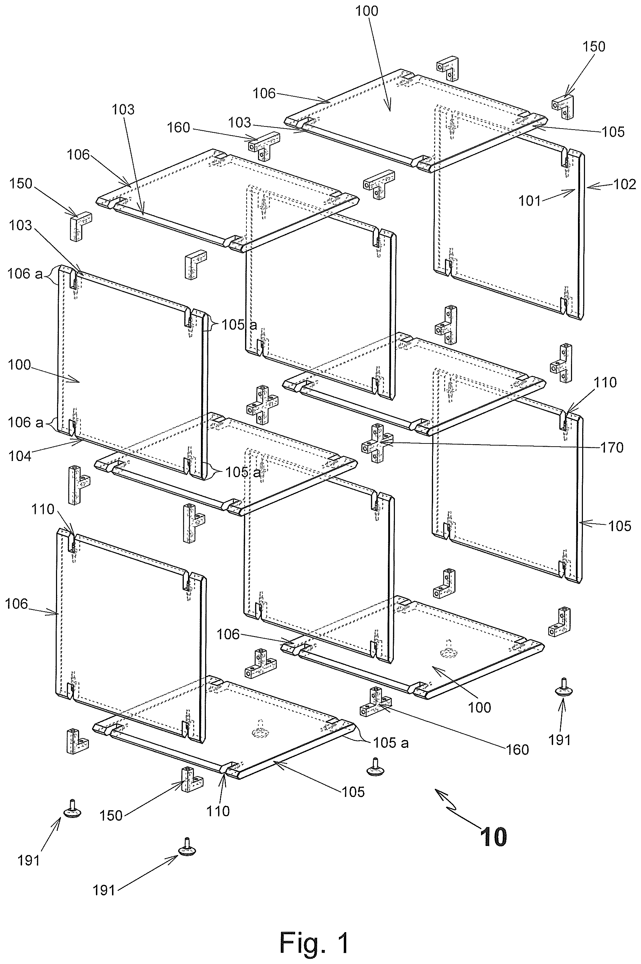

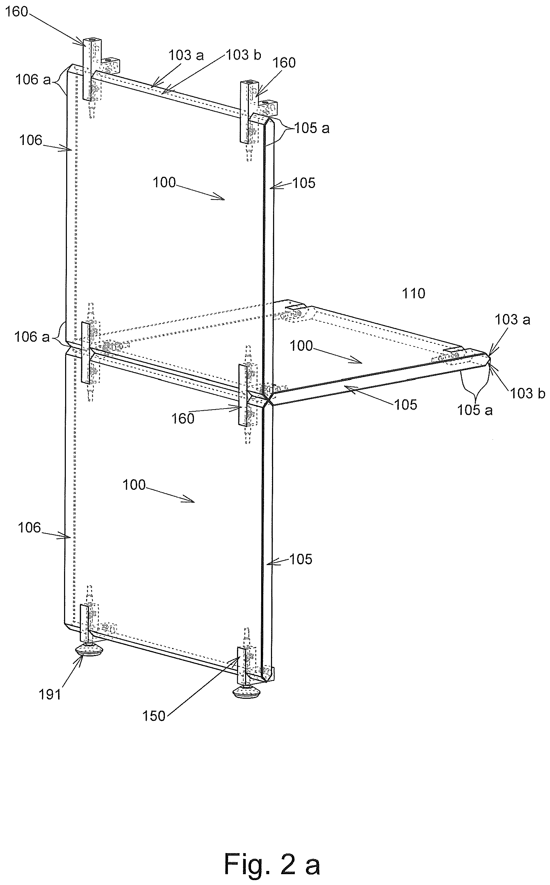

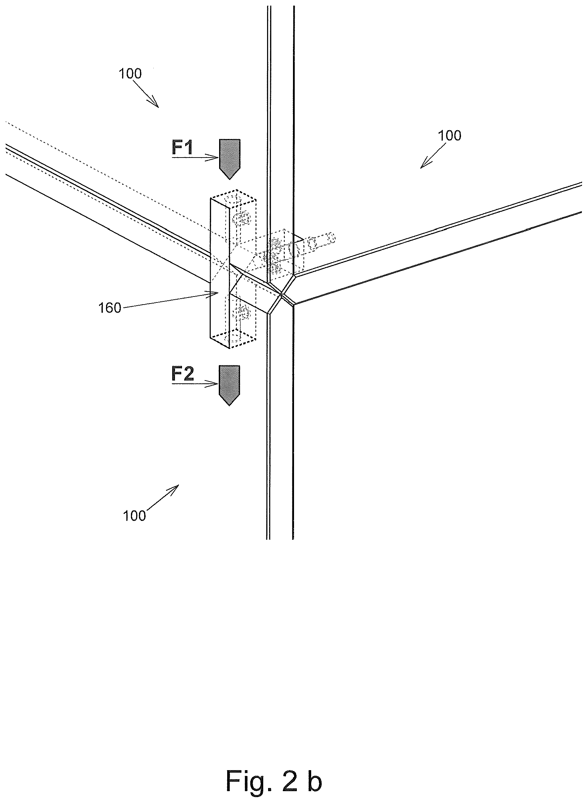

Ferner ist zu beachten, dass in den Figuren 1, 2a und 2b die Bestandteile des Baukastensystems für Möbel, Messeaufbauten oder dergleichen transparent dargestellt sind, was in der Realität natürlich nicht der Fall ist, aber eine aufschlussreichere Darstellung mit sich bringt.

Figur 1 zeigt ein Baukastensystem 10 für Möbel, Messeaufbauten oder dergleichen mit Wandmodulen 100. Die Wandmodule 100 haben eine plattenartige Grundform mit zwei großen Flächen 101, 102, die die Ober- bzw. Unterseite der Platte bilden und vier umlaufenden Randflächen 103, 104, 105, 106.

Die großen Flächen 101, 102 dienen beim bestimmungsgemäß zusammengebauten Möbelstück als Wandabschnitte, so dass es sich bei den Flächen 101, 102 um die Wandflächen des Wandmoduls 100 handelt.

Die Randflächen 103, 104 sind die Flächen des Wandmoduls, über die es bei aufgebautem Möbelstück mit anderen Wandmodulen in Verbindung steht, also sind die Randflächen 103, 104 die Kontaktflächen des Wandmoduls 100. Sie sind jeweils nicht als ebene Oberflächen, sondern als keilförmiges Anlageprofil gestaltet, welches jeweils aus Teilflächen 103a, 103b, 104a, 104b besteht, die ausgehend von den Wandflächen 101, 102 der Wandmodule 100 unter einem Winkel von 45° von den Wandflächen fort nach außen aufeinander zulaufen, bis sie sich an einer Kontaktlinie 103c, 104c berühren.

Diese Formgebung führt insbesondere in Verbindung mit einer entsprechenden Anpassung der weiter unter beschriebenen Ausnehmungen 110 an die Länge des aufzunehmenden balkenförmigen Abschnitts der Verbindungselemente 150, 160, 170 dazu, dass zwei, drei oder vier Wandmodule 100 L-förmig, T-förmig oder kreuzförmig so angeordnet werden können, dass die jeweiligen Teilflächen 103a, 103b, 104a, 104b jeweils aneinander anliegen, so dass sich waagerecht angeordnete Wandmodule 100 über diese Teilflächen an senkrecht angeordneten Wandmodulen 100 abstützen können. Damit ist dann auch sichergestellt, dass von der Frontseite und der Rückseite des zusammengesetzten Möbelstücks oder Messeaufbaus aus betrachtet eine geschlossene Oberfläche entsteht, so dass die Verbindungselemente 150, 160, 170 in Betrachtungsrichtung kaschiert sind.

Die verbleibenden Randflächen sind die frontseitige Fläche 105 bzw. die rückseitige Fläche 106 des Wandmoduls 100.

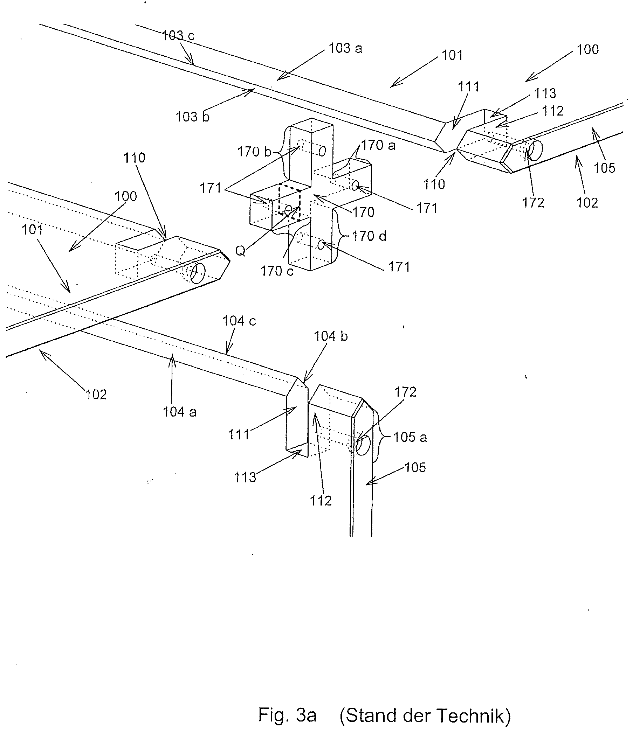

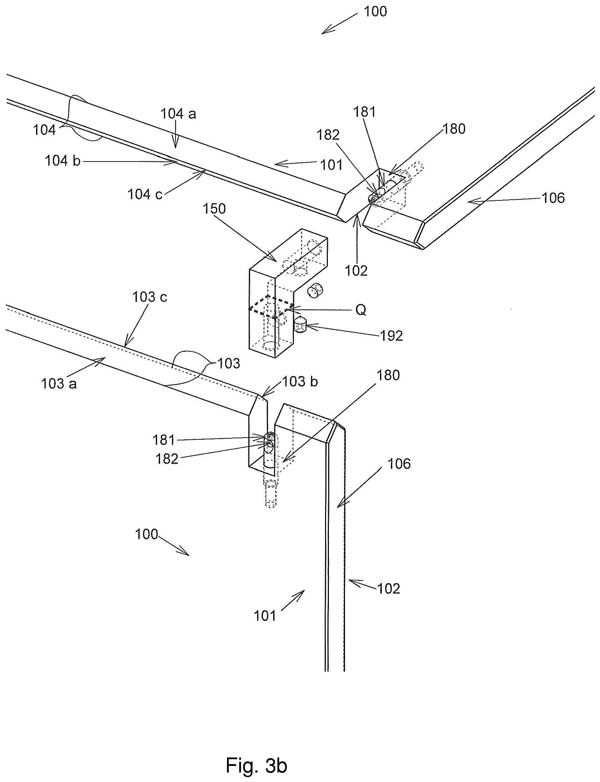

Ferner weisen die in Figur 1 dargestellten Wandmodule 100 jeweils Ausnehmungen 110 auf, deren Ausgestaltung man besonders gut den Detailvergrößerungen gemäß Figuren 3a und 3b in Zusammenschau mit der Figur 1 entnimmt.

Die Ausnehmungen 110 verlaufen ausgehend von der Kontaktfläche 103 bzw. 104 auf einer Seite des Wandmoduls 100 in Richtung auf die dieser gegenüberliegende Kontaktfläche 104 bzw. 103 auf der gegenüberliegenden Seite des Wandmoduls 100. Dabei durchsetzen sie das Wandmodul 100 von einer Wandfläche 101 zur gegenüberliegenden Wandfläche 102 und liegen zwischen Abschnitten 105a, 106a der einander gegenüberliegender frontseitigen Flächen 105 und rückseitigen Flächen 106 des Wandmoduls 100, so dass sie auf drei Seiten von dem Material, aus dem das Wandmodul 100 besteht, umgeben sind, und zwar so, dass bei der hier, insbesondere exemplarisch im Hinblick auf Form der Ausnehmungen 110 und Verbindungselemente 150, 160, 170, beschriebenen Ausführungsform eine erste Grenzfläche 111 und eine zweite Grenzfläche 112,die Abschnitte der Grenze zwischen Ausnehmung 110 und Material des Wandmoduls 100 definieren, parallel zur frontseitigen Fläche 105 und zur rückseitigen Fläche 106 und senkrecht zu den Wandflächen 101, 102 verlaufen, während die dritte Grenzfläche 113 senkrecht zur frontseitigen Fläche 105 und zur rückseitigen Fläche 106 und senkrecht zu den Wandflächen 101, 102 verläuft.

Zu dem Baukastensystem 10 für Möbel, Messeaufbauten oder dergleichen gehören ferner, wie z.B. aus Figur 1 ersichtlich, drei Arten von Verbindungselementen: L-förmige Verbindungselemente 150, T-förmige Verbindungselemente 160 und kreuzförmige Verbindungselemente 170, deren Form beispielsweise jeweils aus den in den Figuren 2a, 2b, 3a und 3b gekennzeichneten balkenförmigen Abschnitten 150a, 150b, 160a bis 160c, 170a bis 170d zusammensetzbar ist, wobei es allerdings nicht darauf ankommt, wie man die entsprechenden balkenförmigen Abschnitte definiert, um die Gesamtform des Verbindungselement zu erreichen. Die balkenförmigen Abschnitte 150a, 150b, 160 a bis c und 170 a bis d stellen somit in dieser Ausführungsform die Arme der L-förmigen, T-förmigen oder kreuzförmigen Verbindungselemente dar.

Figur 2a zeigt ein aus dem in Figur 1 dargestellten Baukastensystem 10 zusammengesetztes Segment eines Möbels, Messeaufbaus oder dergleichen in zusammengesetztem Zustand. Das Segment besteht aus drei Wandmodulen 100, die mit zwei T-förmigen Verbindungselement 160 miteinander verbunden sind, so dass zwei der Wandmodule 100 in Richtung senkrecht zum Boden übereinander angeordnet durch die T-förmigen Verbindungselemente 160 miteinander verbunden sind, so dass sie entlang ihrer in Figur 2a nicht erkennbaren Kontaktlinien 103c, 104c einander berühren. Senkrecht dazu, also waagerecht zum Boden verlaufend, ist das dritte Wandmodul 100 an den T-förmigen Verbindungselementen 160 angeordnet, so dass seine nicht in Figur 2a erkennbaren Kontaktflächen 104a, 104b in Kontakt mit jeweils einer Kontaktfläche des oberen Wandmoduls und des unteren Wandmoduls stehen.

Figur 2 zeigt ein Dilemma auf, das bislang durch die keilförmige Gestaltung der Kontaktflächen 103a, 103b, 104a, 104b insbesondere bei am Rand des Möbels, Messeaufbaus o.ä. entstand. Einerseits ist diese Gestaltung nämlich gut geeignet, um die Last, die bei Benutzung des Möbels oder Messeaufbaus auf waagerecht verlaufende Wandmodule 100 wirkt, in benachbarte, senkrecht verlaufende, bodennähere Wandmodule einzuleiten. Andererseits ist aber die Lastabtragung in Richtung senkrecht zum Boden problematisch, da die Stabilisierung in die vierte Richtung fehlt.

Durch die erfindungsgemäße Gestaltung von Ausnehmungen 110 und Verbindungselementen 150, 160, 170 lässt sich diese Problematik jedoch entschärfen, wie die Ausschnittsvergrößerung der Figur 2b zeigt. Die senkrecht wirkenden Kräfte F1, die durch das in dieser Darstellung obere Wandmodul 100 hervorgerufen bzw. über es abgeleitete werden müssen, werden in das Verbindungselement 160 eingeleitet und von diesem an das untere Wandmodul 100 eingeleitet. Die Lastabtragung kann also dank der relativ massiven, der Dicke der Wandmodule 100 angepasste Ausgestaltung des Verbindungselements 160 einerseits und der großen Kontaktflächen zwischen Verbindungselement 160 und dem Wandmodul 100 andererseits im Wesentlichen oder gar vollständig über die Verbindungselemente 160 erfolgen, zumal auch ein Ausbrechen derselben selbst beim Wirken großer Kräfte aufgrund der geometrischen Anordnung der in Figur 2b nicht erkennbaren Aufnahmen 110 sicher vermieden wird.

Wie insbesondere die Figuren 3a und 3b gut erkennen lassen, ist der exemplarisch in diesen Figuren an einem balkenförmigen Abschnitt als gestrichelte Linie eingezeichnete Querschnitt Q an die Form der Ausnehmung 110 angepasst.

In den Figuren 3a und 3b sind beispielhaft zwei unterschiedliche Arten der Fixierung der Wandmodule 100 an Verbindungselementen 150, 170 dargestellt. In der Darstellung gemäß Figur 3a ist in den vier balkenförmigen Abschnitten des Verbindungselements 170 jeweils eine Gewindebohrung 171 eingebohrt und in der frontseitigen Fläche 105 oder der rückseitigen Fläche 106 ist eine Bohrung 172 vorgesehen, durch die beim Zusammenbau des Möbelstücks eine Schraube gesteckt und in die Gewindebohrung eingedreht werden kann, so dass eine feste und tragfähige Verbindung zwischen Wandmodul 100 und Verbindungselement 170 entsteht.

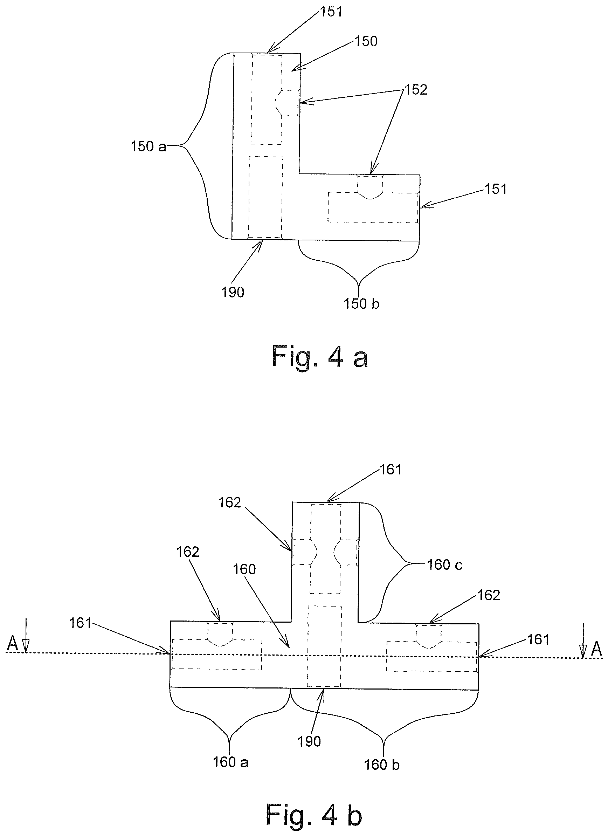

Eine weitere Möglichkeit zur Fixierung ist exemplarisch in Figur 3b für ein L-förmiges Verbindungselement 150 dargestellt, wobei zum klareren Verständnis auch auf die Figuren 4a und 4b verwiesen wird, die Querschnitte von Verbindungselementen 150, 160 zeigen, die für die nun beschriebene Fixiermöglichkeit ausgelegt sind.

Wie man in Figur 3b erkennt, ist jeweils an dem die Ausnehmung 110 in Richtung auf die der Kontaktfläche 103, von der die Ausnehmung 110 ausgeht, gegenüberliegende Kontaktfläche 104 begrenzenden Wandabschnitt 180 ein Zapfen 181 mittig eingeschraubt, der von einer Bohrung 182, bevorzugt einer Bohrung mit kegelförmigem Einführabschnitt, durchsetzt wird. Die Gewindebohrung 182 ist dabei beim Einschrauben des Zapfens 181 so orientiert worden, dass sie in der Richtung der Verbindungslinie zwischen den Wandflächen 101, 102 des Wandmoduls 100 steht. In den in die Ausnehmung 110 einzuführenden balkenförmigen Abschnitten 150a, 150b bzw. 160 a bis c ist, wie in den Schnittdarstellungen gemäß Figuren 4a und 4b am besten zu erkennen ist, jeweils eine zentrale erste Bohrung 151 bzw. 161 vorgesehen, die so mit dem Zapfen 181 korrespondiert, dass bei in die Bohrung 151 bzw. 161 eingeführtem Zapfen 181 ein stufenloser Übergang zwischen den Wandflächen 101, 102 und den entsprechenden Oberflächen des Verbindungselements 150, 160, 170 entsteht.

Um das Verbindungselement 150 bzw. 160 in dieser Position zu sichern, ist in den balkenförmigen Abschnitten 150a, 150b bzw. 160 a bis c jeweils eine weitere, senkrecht zur ersten Bohrung 151 bzw. 161 in Richtung der Verbindungslinie der Wandflächen 101, 102 des jeweiligen Wandmoduls 100, in dessen Ausnehmung 110 der entsprechende balkenförmige Abschnitt 150a, 150b bzw. 160 a bis c beim Zusammenbau des Möbelstücks bzw. Messeaufbaus einzuführen ist, verlaufende zweite Bohrung 152 bzw. 162 vorgesehen, welche, wenn das Verbindungselement 150 bzw. 160 mit dem Wandmodul 100 zusammengefügt ist, mit der Bohrung 182 kommuniziert, so dass das Verbindungselement 150 mit dem Wandmodul 100 durch Eingriff in die Bohrung 182 verbindbar bzw. fixierbar ist, insbesondere unter Verwendung von Madenschrauben 192.

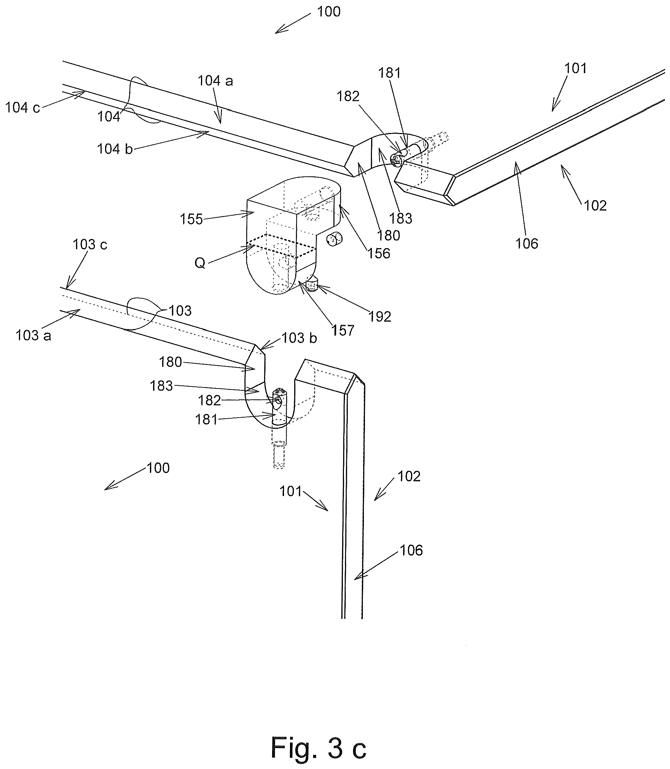

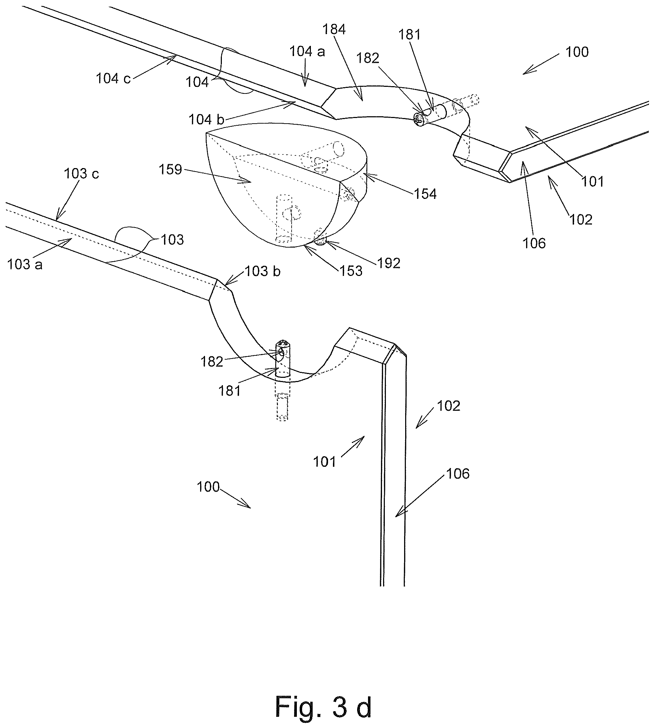

Die Figuren 3c und 3d zeigen jeweils die in Figur 3b dargestellte Situation, unterscheiden sich davon jedoch im Hinblick auf die Formgebung der Verbindungselemente 155 bzw. 159 und der korrespondierenden Ausnehmungen der Wandmodule 100. Sie verdeutlichen insbesondere, dass die erfindungsgemäße Ausgestaltung nicht zwingend ausschließlich aus balkenartigen Abschnitten zusammengesetzt sein muss, sondern auch abschnittsweise oder sogar insgesamt eine andere Formgebung der Verbindungselemente 155, 159 möglich ist und dass die Ausnehmung 110 ebenfalls nicht unbedingt eine rechteckige Grundform haben muss. Wichtig ist die Anpassung zwischen den Flächen, die bei im Wandmodul 100 aufgenommenem Verbindungselement 150, 155, 159, 160 bzw. 170 die Grenzflächen zwischen Wandmodul 100 und Verbindungselement 150, 155, 159,160 bzw. 170 bilden, d.h. in den Figuren 3c und 3d insbesondere der Flächen 156, 157 bzw. 153, 154 und den korrespondierenden Grenzflächen des Wandmoduls in der Ausnehmung 183 bzw. 184. Selbstverständlich ist diese Formgebung, die insbesondere die in die jeweiligen Ausnehmungen der Wandmodule 100 aufzunehmenden Abschnitte betrifft, nicht nur für L-förmige Verbindungselemente 155,159, wie sie in Figuren 3c und 3d gezeigt sind, möglich, sondern auch auf T-förmige und kreuzförmige Verbindungselemente übertragbar.

Die Figuren 4a und 4b zeigen darüber hinaus noch in gestrichelter Darstellung eine weitere optionale Gewindebohrung 190. Die Gewindebohrung 190 ermöglicht es, einen an einer Schraube angeordneten Möbelfuß 191, wie er in Figur 1 dargestellt ist, in das jeweilige Verbindungselement 150, 160, 170, aber natürlich auch in Verbindungselemente 155, 159 der Formgebung, wie sie sich aus den in Figuren 3c und 3d gezeigten Gestaltungsprinzipien ergeben, einzuschrauben. Dies bringt die Möglichkeit mit sich, das aus dem Baukastensystem 10 zusammengesetzte Möbelstück bzw. den daraus zusammengesetzten Messeaufbau auch auf unebenem Untergrund so auszurichten, dass ein Schrägstand insbesondere von Wandmodulen 100, die einen Boden eines Fachs oder Regalboden des Möbelstücks bzw. Messeaufbaus bilden, vermieden werden kann.

Selbstverständlich ist diese Befestigungsmöglichkeit auch direkt auf ein kreuzförmiges Verbindungselement übertragbar. Dies ergibt sich unmittelbar, wenn man bedenkt, dass sich ein Querschnitt durch ein kreuzförmiges Verbindungselement 170 ergibt, wenn man unter Vernachlässigung der optionalen Gewindebohrung 190 den oberhalb der punktiert angedeuteten Achse A-A liegenden Teil des T-förmigen Verbindungselements 160 an dieser Achse spiegelt.

### Bezugszeichenliste

- 10: Baukastensystem
- 100: Wandmodul
- 101,102: Wandfläche
- 103,104: Kontaktfläche
- 103a,103b,104a,104b: Teilfläche einer Kontaktfläche
- 103c,104c: Kontaktlinie
- 105: frontseitige Fläche
- 105a: Abschnitt der frontseitigen Fläche
- 106: rückseitige Fläche
- 106a: Abschnitt der rückseitigen Fläche
- 110: Ausnehmung
- 111: erste Grenzfläche
- 112: zweite Grenzfläche
- 113: dritte Grenzfläche
- 150, 155, 159: L-förmiges Verbindungselement
- 150a, 150b: balkenförmige Abschnitte
- 151, 161: erste Bohrung
- 152, 162: zweite Bohrung
- 153, 154, 156, 157: Flächen des Verbindungselements
- 160: T-förmiges Verbindungselement
- 160a, 160b, 160c: balkenförmige Abschnitte
- 170: kreuzförmiges Verbindungselement
- 170a, 170b, 170c, 170d: balkenförmige Abschnitte
- 171: Gewindebohrung
- 172: Bohrung
- 180: Wandabschnitt
- 181: Zapfen
- 182, 190: Gewindebohrung
- 183, 184: Flächen des Wandmoduls
- 191: Möbelfuß
- 192: Madenschraube
- A-A: Achse
- Q: Querschnitt

## Patentansprüche

1. Baukastensystem (10) für Möbel oder Messeaufbauten mit Wandmodulen (100), die jeweils
- einander gegenüberliegende Wandflächen (101,102),
- eine frontseitige Fläche (105) und eine der frontseitigen Fläche (105) gegenüberliegende rückseitige Fläche (106) und
- einander gegenüberliegende Kontaktflächen (103,104) aufweisen, welche direkt miteinander verbunden sind und mit Verbindungselementen (150,155,159,160,170) zum Verbinden der Wandmodule (100) miteinander, wobei die Verbindungselemente (150, 155, 159, 160, 170) mindestens eine L-förmige, T-förmige oder kreuzförmige Querschnittsfläche aufweisen, wobei
die Wandmodule (100) mindestens eine Ausnehmung (110) zur Aufnahme jeweils eines an die Form der Ausnehmung (110) angepassten Abschnitts (150a,150b,160a-c,170a-d) der Verbindungselemente (150,155,159,160,170) aufweisen, wobei die Ausnehmung (110)
- ausgehend von der Kontaktfläche (103, 104) auf einer Seite des Wandmoduls (100) in Richtung auf die dieser gegenüberliegenden Kontaktfläche (104,103) auf der anderen Seite des Wandmoduls (100) verläuft,
- das Wandmodul (100) in Richtung von einer Wandfläche (101,102) zur gegenüberliegenden Wandfläche (102,101) durchsetzt, und
- zwischen Abschnitten (105a,106a) der einander gegenüberliegenden frontseitigen Fläche (105) und rückseitigen Fläche (106) liegt, wobei ferner
die Ausdehnung der Abschnitte (150a,150b,160a-c, 170a-d) der Verbindungselemente (150,155,159,160,170), wenn sie in die Ausnehmung (110) eines Wandmoduls (100) eingesetzt sind, in der Richtung senkrecht zu den einander gegenüberliegenden Wandflächen (101,102) des Wandmoduls (100)dem Abstand der einander gegenüberliegenden Wandflächen (101,102) des Wandmoduls (100) entspricht, so dass im zusammengebauten Zustand des Möbelstücks oder Messeaufbaus auch im Bereich der Ausnehmung eine ebene, stufenlose Materialoberfläche vorhanden ist,
**dadurch gekennzeichnet, dass** in der Ausnehmung (110) des Wandmoduls (100) ein sich in Richtung der direkten Verbindung zwischen den Kontaktflächen (103,104) erstreckender Zapfen (181) vorgesehen ist und dass das Verbindungselement (150, 155, 159, 160, 170) mindestens einen Abschnitt (150a,150b,160a-c,170a-d) mit einer Bohrung (151) zur passgenauen Aufnahme des Zapfens (181) aufweist.

2. Baukastensystem (10) für Möbel oder Messeaufbauten nach Anspruch 1,
**dadurch gekennzeichnet, dass** die Verbindungselemente (150,160,170) die Gestalt L-förmig, T-förmig oder kreuzförmig miteinander verbundener balkenförmiger Abschnitte (150a,150b,160a-c,170a-d) haben und dass die Ausdehnung des rechteckigen Querschnitts (Q) der balkenförmigen Abschnitte (150a,150b,160a-c,170a-d) der Verbindungselemente (150,160,170) in der Richtung einer Seite des den Querschnitt (Q) definierenden Rechtecks dem Abstand der einander gegenüberliegenden Wandflächen (101,102) eines Wandmoduls (100) entspricht und in der Richtung der anderen Seite des Rechtecks der Ausdehnung der Ausnehmung (110) in Richtung der direkten Verbindung zwischen frontseitiger Fläche (105) und rückseitiger Fläche (106) des Wandmoduls (100) entspricht.

3. Baukastensystem (10) für Möbel oder Messeaufbauten nach einem der Ansprüche 1 oder 2,
**dadurch gekennzeichnet, dass** mindestens ein Verbindungselement (150,160,170) eine Gewindebohrung (190) zur verstellbaren Aufnahme eines an einer Schraube angeordneten Möbelfußes (191) aufweist.

4. Baukastensystem (10) für Möbel oder Messeaufbauten nach einem der vorstehenden Ansprüche,
**dadurch gekennzeichnet, dass** zwei Ausnehmungen (110) pro Seite vorhanden sind, wobei jeweils eine Ausnehmung (110) gleich weit von der frontseitigen Fläche (105) bzw. von der rückseitigen Fläche (106) des Wandmoduls (100) beabstandet ist.

5. Baukastensystem (10) für Möbel oder Messeaufbauten nach einem der vorstehenden Ansprüche,
**dadurch gekennzeichnet, dass** die Kontaktfläche (103,104) keilförmig ausgestaltet ist und aus Teilflächen (103a,103b,104a,104b) besteht, welche ausgehend von den Wandflächen (101,102) des Wandmoduls (100) unter einem Winkel von 45° von den Wandflächen (101,102) fort nach außen aufeinander zulaufen.

6. Möbelstück oder Messeaufbau,
**dadurch gekennzeichnet, dass** das Möbelstück oder der Messeaufbau zumindest teilweise auf einem Baukastensystem (10) für Möbel, Messeaufbauten oder dergleichen nach einem der vorstehenden Ansprüche basiert.

7. Möbelstück oder Messeaufbau nach Anspruch 6,
**dadurch gekennzeichnet, dass** die Last der senkrecht zu einem Boden, auf dem das Möbelstück oder der Messeaufbau steht, angeordneten Wandmodule (100) in die Verbindungselemente (150,155,159,160,170), welche das jeweilige Wandmodul (100) mit dem in Richtung auf den Boden hin angrenzende senkrecht zum Boden angeordnete Wandmodul (100) hin verbinden, eingeleitet und von den Verbindungselementen (150,155,159,160,170) an dieses angrenzende Wandmodul (100) abgeleitet werden.

8. Möbelstück oder Messeaufbau nach Anspruch 6 oder 7,
**dadurch gekennzeichnet, dass** Teilflächen (103a,103b,104a,104b) der Kontaktflächen (103,104) unterschiedlicher Wandmodule (100) aufeinander abgestützt sind.

## Claims

1. A modular system (10) for furniture or for exhibition structures, said modular system (10) having wall modules (100), each comprising
- wall surfaces (101, 102) which are situated opposite one another
- a front surface (105) and a rear surface (106) which is situated opposite said front surface (105) and
- contact areas (103, 104) which are situated opposite one another, that are connected directly to each other and comprising connecting elements (150, 155, 159, 160, 170) for connecting the wall modules (100) to one another,
wherein the connecting elements have at least one L-shaped, T-shaped or cruciform cross-sectional area, wherein
the wall modules (100) have at least one recess (110) for receiving in each case one portion (150a, 150b, 160a-c, 170a-d) of the connecting element (150, 155, 159, 160, 170) which is matched to the shape of the recess (110),
wherein the recess (110)
- runs, starting from the contact area (103, 104) on one side of the wall module (100), in the direction of the contact area (104, 103), which is situated opposite said contact area, on the other side of the wall module (100),
- passes through the wall module (100) in the direction of a wall surface (101, 102) to the opposite wall surface (102, 101), and
- is situated between sections (105a, 106a) of the front surface (105) and rear surface (106) which are situated opposite one another, and wherein further the extent of the portions (150a, 150b, 160a-c, 170a-d) of the connecting elements (150, 155, 159, 160, 170), when they are inserted into the recess (110) in a wall module (100), in the direction perpendicular to the wall surfaces (101, 102) of the wall module (100) which are situated opposite one another, corresponds to the distance between the wall surfaces (101, 102) of the wall module (100) which are situated opposite one another so that in the assembled state of the item of furniture or exhibition structure, a flat, continuous material surface is present even in the region of the recess,
**characterized in that** a tenon (181) extending in the direction of the direct connection between the contact areas (103, 104) is provided within the recess (110) of the wall module (100,) and **in that** the connecting element has at least one portion (150a, 150b, 160a-c, 170a-d) with a bore (151) for precisely receiving the tenon (181).

2. The modular system (10) for furniture or exhibition structures according to Claim 1,
**characterized in that** the connecting elements (150, 160, 170) have the shape of L-shaped, T-shaped or cruciform bar-shaped portions (150a, 150b, 160a-c, 170a-d) connected to one another, and **in that** the extent of the rectangular cross-section (Q) of the bar-shaped portions (150a, 150b, 160a-c, 170a-d) of the connecting elements (150, 160, 170) in the direction of a side of the rectangle defining said cross-section (Q) corresponds to the distance of the wall surfaces (101, 102) of a wall module (100) situated opposite one another and in the direction of the other side of the rectangle corresponds to the extent of the recess (110) in the direction of a direct connection between front surface (105) and rear surface (106) of the wall module (100).

3. The modular system (10) for furniture or exhibition structures according to any of claims 1 or 2,
**characterized in that** at least one connecting element (150, 160, 170) has a threaded bore (190) for adjustably receiving a furniture foot (191) arranged on a screw.

4. The modular system (10) for furniture or for exhibition structures according to any of the preceding Claims, **characterized in that** there are two recesses (110) on each side, wherein the distance of a first of these recesses (110) to the front surface (105) and the distance of a second of theses recesses (110) to the rear surface (106) of the wall module (100), repsectively, are equal.

5. The modular system (10) for furniture or for exhibition structures according to any of the preceding Claims, **characterized in that** the contact area (103, 104) is configured as a wedge shape and comprises subareas (103a, 103b, 104a, 104b), which, beginning from the wall surfaces (101, 102), extend at an angle of 45° from said wall surfaces outwardly to converge with one another.

6. An item of furniture or exhibition structure **characterized in that** said item of furniture or exhibition structure is at least partially based on a modular system (10) for furniture or exhibition structures according to one of the preceding Claims.

7. The item of furniture or exhibition structure according to Claim 6,
**characterized in that** the load of the wall module (100), arranged perpendicular to a floor on which the item of furniture or the exhibition structure stands, is passed to the connecting elements (150, 155, 159, 160, 170) which connect the respective wall module (100) with the adjacent wall module (100) arranged perpendicularly to the floor in a direction toward the floor, and is transferred from the connecting elements (150, 155, 159, 160, 170) to this adjacent wall module (100).

8. The item of furniture or exhibition structure according to Claim 6 or 7,
**characterized in that** the subareas (103a, 103b, 104a, 104b) of the contact areas (103, 104) of different wall modules (100) are supported by one another.

## Revendications

1. Système modulaire (10) pour des meubles ou des stands de foire avec des modules muraux (100), comprenant chacun
- des surfaces de mur (101, 102) opposées l'une à l'autre,
- une surface frontale (105) et une surface arrière (106) opposée à la surface frontale (105) et
- des surfaces de contact (103, 104) opposées l'une à l'autre, lesquelles sont directement liées l'une à l'autre,
et avec des éléments de liaison (150, 155, 159, 160, 170) destinés à relier les modules muraux (100) les uns aux autres, les éléments de liaison (150, 155, 159, 160, 170) comportant au moins une surface de section transversale en forme de L, de T ou de croix,
les modules muraux (100) comportant au moins un évidement (110) destiné à recevoir chacun une partie (150a, 150b, 160a-c, 170a-d) des éléments de liaison (150, 155, 159, 160, 170) adaptée à la forme de l'évidement (110), dans lequel l'évidement (110)
- s'étend depuis la surface de contact (103, 104) d'un côté du module mural (100) en direction de la surface de contact (103, 104) opposée à celle-ci de l'autre côté du module mural (100),
- traverse le module mural (100) dans une direction qui va d'une surface murale (101, 102) à la surface murale (101, 102) opposée, et
- se situe entre des parties (105a, 106a) de la surface frontale (105) et de la surface arrière (106), qui sont opposées l'une à l'autre, dans lequel en outre l'extension des parties (150a, 150b, 160a-c, 170a-d) des éléments de liaison (150, 155, 159, 160, 170), quand elles sont placées dans l'évidement (110) d'un module mural (100), correspond à l'écart des surfaces murales (101, 102) opposées l'une à l'autre du module mural (100) dans la direction perpendiculaire aux surfaces murales (101,102) opposées l'une à l'autre du module mural (100), si bien que dans l'état assemblé de l'élément de mobilier ou du stand de foire une surface de matériau plate et continue est présente y compris au niveau de l'évidement,
caractérisé en que dans l'évidement (110) du module mural (100) un tenon (181) s'étendant en direction de la liaison directe entre les surfaces de contact (103, 104) est prévu et que l'élément de liaison (150, 155, 159, 160, 170) comprend au moins une partie (150a, 150b, 160a-c, 170a-d) avec un alésage (151) destiné à recevoir le tenon (181) de façon ajustée.

2. Système modulaire (10) pour des meubles ou des stands de foire selon la revendication 1,
**caractérisé en ce que** les éléments de liaison (150, 160, 170) ont la forme de parties (150a, 150b, 160a-c, 170a-d) en forme de barre liées les unes aux autres en forme de L, de T ou de croix et que l'extension de la section transversale (Q) rectangulaire des parties (150a, 150b, 160a-c, 170a-d) en forme de barre des éléments de liaison (150, 160, 170) correspond dans la direction d'un côté du rectangle définissant la section transversale (Q) à l'écart des surfaces murales (101, 102) opposées l'une à l'autre du module mural (100) et correspond dans la direction de l'autre côté du rectangle à l'extension de l'évidement (110) en direction de la liaison directe entre surface frontale (1905) et surface arrière (106) du module mural (100).

3. Système modulaire (10) pour des meubles ou des stands de foire selon l'une des revendications 1 ou 2,
**caractérisé en ce qu'**au moins un élément de liaison (150, 160, 170) comprend un alésage taraudé (190) destiné à recevoir de manière réglable un pied de meuble (191) disposé sur une vis.

4. Système modulaire (10) pour des meubles ou des stands de foire selon l'une des revendications précédentes,
**caractérisé en ce que** deux évidements (110) par côté sont prévus, un évidement (110) de chaque étant espacé de la même distance de la surface frontale (105), respectivement de la surface arrière (106) du module mural (100).

5. Système modulaire (10) pour des meubles ou des stands de foire selon l'une des revendications précédentes,
**caractérisé en ce que** la surface de contact (103, 104) est arrangée en forme de coin et est constituée de surfaces partielles (103a, 103b, 104a, 104b), lesquelles convergent l'une vers l'autre à partir des surfaces murales (101, 102) du module mural (100) avec un angle de 45° dans le prolongement des surfaces murales (101, 102) vers l'extérieur.

6. Meuble ou stand de foire,
**caractérisé en ce que** le meuble ou le stand de foire repose au moins en partie sur un système modulaire (10) pour des meubles, des stands de foire ou des installations similaires selon l'une des revendications précédentes.

7. Meuble ou stand de foire selon la revendication 6,
**caractérisé en ce que** la charge des modules muraux (100) disposés perpendiculairement à un sol, sur lequel le meuble ou le stand de foire se trouve, est introduite dans les éléments de liaison (150, 155, 159, 160, 170), lesquels relient le module mural (100) respectif au module mural (100) adjacent en direction du sol disposé perpendiculairement au sol, et est évacuée des éléments de liaison (150, 155, 159, 160, 170) vers ce module mural (100) adjacent.

8. Meuble ou stand de foire selon l'une des revendications 6 ou 7,
**caractérisé en ce que** des surfaces partielles (103a, 103b, 104a, 104b) des surfaces de contact (103, 104) de différents modules muraux (100) s'appuient les unes sur les autres.
